# EUROPEAN PATENT APPLICATION

(11) **EP 3 425 121 A1**
(43) Date of publication of application: **09.01.2019**
(21) Application number: 17179858.0
(22) Date of filing: 05.07.2017
(51) Int. Cl.: E02D 9/04, B23D 57/00

(54) **AN APPARATUS FOR CUTTING TUBULAR OBJECTS**

(71) Applicant: Underwater Cutting Solutions Limited, Newcastle upon Tyne and Wear NE13 6PH (GB)
(72) Inventor: The designation of the inventor has not yet been filed
(74) Representative: Vinsome, Rex Martin

(57) **Abstract**

A pipe cutter 10 is provided. The pipe cutter 10 comprises four vertical blades 14 and four horizontal blades 16 adapted to cut around a first part of the circumference of the pipe 28 and around a second part of the circumference of the pipe 28, wherein the first part is axially offset from the second part, and to form a plurality of axial cuts VC to join the first and second parts to form a continuous cut around the circumference of the pipe 28. A method for cutting the pipe is also provided.

## Description

### Introduction

The present invention relates to an apparatus for cutting tubular objects and relates particularly, but not exclusively, to an apparatus and method for internally cutting pile walls and/or jacket legs.

### Background

Piles are foundational structures often used in subsea environments. A typical pile has an annular profile and is placed in an orientation perpendicular to the direction of gravity. Piles in situ may need to be cut, such as for the removal of an upper portion, and the location of the cut may be underground. It is difficult to perform such a cut from the outside without removing at least a portion of the ground, so cutting must often be performed from the inside of the pile.

Pile walls must be thick enough to provide a required amount of support to a given mass. As pile wall thicknesses increase, cutting thereof becomes more difficult and time-consuming. Circular blades can be jammed by the pile as cutting progresses and the pile portions move relative to one another under gravity. Other methods, such as water jet cutting, become less cost-effective as their operation time increases with wall thickness. When cutting larger piles using water jet cutting techniques, the cutting cannot be performed continuously because continual maintenance of the water jet nozzle is required to avoid nozzle failure.

Preferred embodiments of the present invention seek to overcome one or more of the above disadvantages of the prior art.

According to a first aspect of the present invention, there is provided a cutting apparatus for cutting a tubular object, the apparatus comprising: cutting means comprising at least one circular blade, the cutting means adapted to cut around a first part of the circumference of the object and around a second part of the circumference of the object, wherein the first part is axially offset from the second part, and to form a plurality of axial cuts to join the first and second parts to form a continuous cut around the circumference of the object; and wherein the cutting means is adapted to form the axial cuts to have dimensions sufficient to prevent impingement of the object on at least one circular blade upon completion of the cut.

By providing cutting means adapted to cut around a first part of the circumference of the object and around a second part of the circumference of the object, wherein the first part is axially offset from the second part, and to form a plurality of axial cuts to join the first and second parts to form a continuous cut around the circumference of the object, the advantage is provided that the time taken to complete a cut is reduced while preventing interference with the cutting means by the object being cut.

The apparatus may further comprise actuating means for actuating the cutting means between a stored configuration, a first cutting configuration to cut the first and second parts, and a second cutting configuration to form the axial cuts.

This provides the advantage of enabling the apparatus to be retractable and reusable, thereby decreasing costs.

The actuating means may be further configured to form the axial cuts to have dimensions sufficient to prevent impingement of the object on the cutting means upon completion of the cut.

This provides the advantage of decreasing the likelihood of interference with the cutting means by the object being cut.

The actuating means may comprise at least one slide and rail assembly for actuating the cutting means along an axis of the assembly.

This provides the advantage of increasing the stability of the cutting means during cutting.

The axis of the assembly may be arranged to be substantially parallel to a longitudinal axis of the apparatus.

This enables consistent and stable cutting of the pile wall, thereby providing the advantage of reducing the likelihood of damage to the apparatus.

The apparatus may be configured to cut the first and second parts substantially transverse to a longitudinal axis of the apparatus.

This reduces the amount of cutting required to complete a cut around the periphery of the wall of the object being cut, thereby providing the advantage of decreasing cutting time.

The apparatus may be configured to form at least one axial cut substantially parallel to a longitudinal axis of the apparatus.

This further reduces the amount of cutting required to complete a cut around the periphery of the wall of the object being cut, thereby providing the advantage of further decreasing cutting time.

The cutting means may comprise at least two first blades and at least two second blades, wherein the at least two first blades are arranged substantially symmetrically around a longitudinal axis of the apparatus, and wherein the at least two second blades are arranged substantially symmetrically around a longitudinal axis of the apparatus.

The cutting means may comprise at least four blades arranged to simultaneously form the axial cuts.

This provides the advantage of decreasing the time it takes to complete a cut without comprising the stability of the object being cut during the cutting process.

The cutting means may comprise at least one circular blade.

This provides the advantage of increasing the cutting rate.

According to a second aspect of the present invention, there is provided a method for cutting a tubular object using cutting means comprising at least one circular blade, the method comprising the steps of: cutting around a first part of the circumference of the object; cutting around a second part of the circumference of the object, wherein the first part is axially offset from the second part; and forming a plurality of axial cuts to join the first and second parts to form at least one continuous cut around the circumference of the object; wherein the cutting means is adapted to form the axial cuts to have dimensions sufficient to prevent impingement of the object on at least one circular blade upon completion of the cut.

The cutting means may be located within the tubular object being cut.

This provides the advantage that objects that are difficult to access in order to cut, such as buried objects, can be cut without additional effort, such as excavation.

The method may be carried out by an apparatus as defined above.

### List of figures

Preferred embodiments of the present invention will now be described, by way of example only and not in any limitative sense, with reference to the accompanying drawings, in which:
Figure 1 shows a perspective view of a cutting apparatus of a first embodiment of the present invention;
Figure 2 shows a cut-away view of part of the cutting apparatus of a of Figure 1;
Figure 3 shows a plan view of part of the cutting apparatus of a of Figure 1;
Figure 4 shows a side view of the cutting apparatus of a of Figure 1 in a first state;
Figure 5 shows a side view of the cutting apparatus of a of Figure 1 in a second state;
Figure 6 shows a close-up view of cutting means of the cutting apparatus of a of Figure 1;
Figure 7 shows a plan view of cutting means of the cutting apparatus of a of Figure 1 in a first configuration;
Figure 8 shows a plan view of cutting means of the cutting apparatus of a of Figure 1 in a second configuration;
Figure 9 shows a plan view of cutting means of the cutting apparatus of a of Figure 1 in a third configuration; and
Figure 10 shows a schematic view of cuts to be made in a pipe wall in accordance with a second embodiment of the present invention.

### Reference numerals

- 10: pipe cutter
- 12: cutting means
- 14: vertical blades
- 16: horizontal blades
- 18: frame
- 20: slide and rail assemblies
- 22: first actuators
- 24: arms
- 26: second actuators
- 28: pile
- 30: upper part of cut pile
- 32: lower part of cut pile
- 34: motors
- 36: clamp assembly
- 38: abutments
- 40: pivoting arms
- 42: third actuators
- 44: clamp assembly frame
- 46: extendible frame members

### Specific description

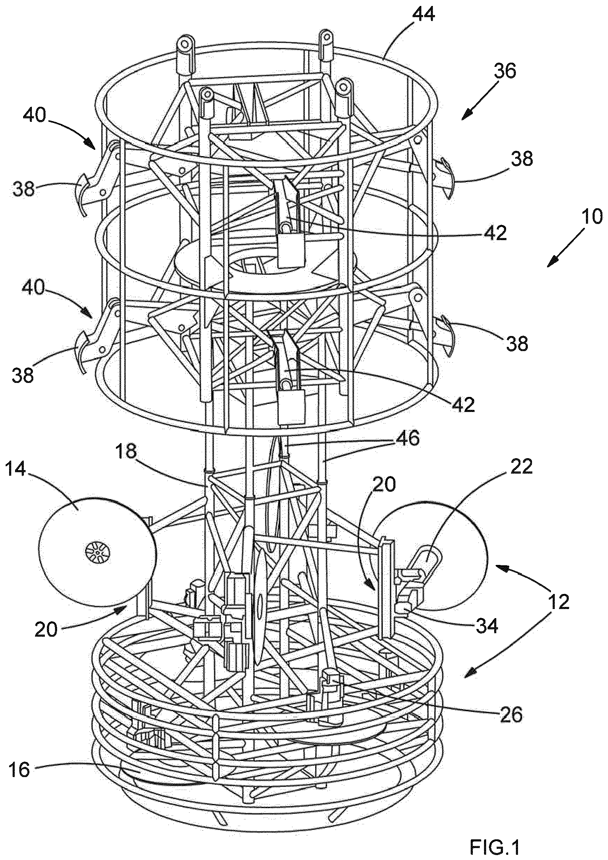

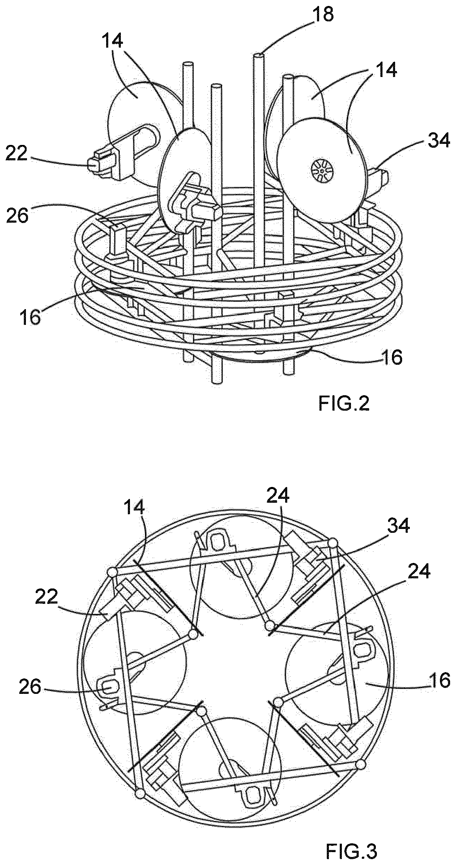

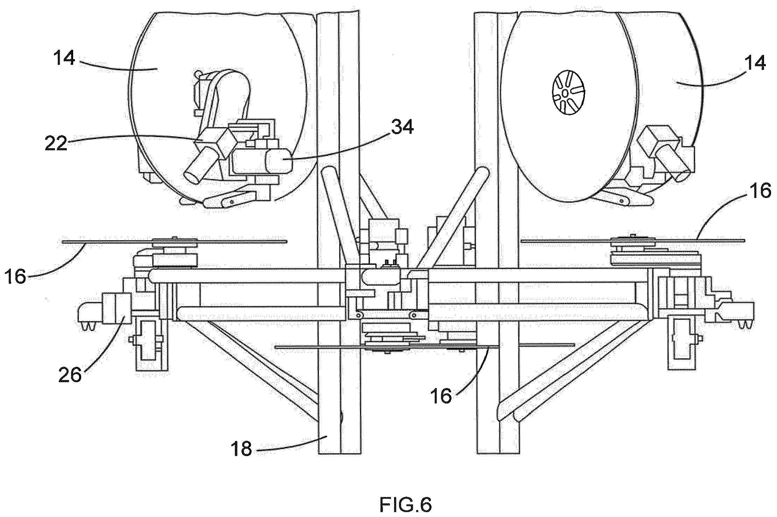

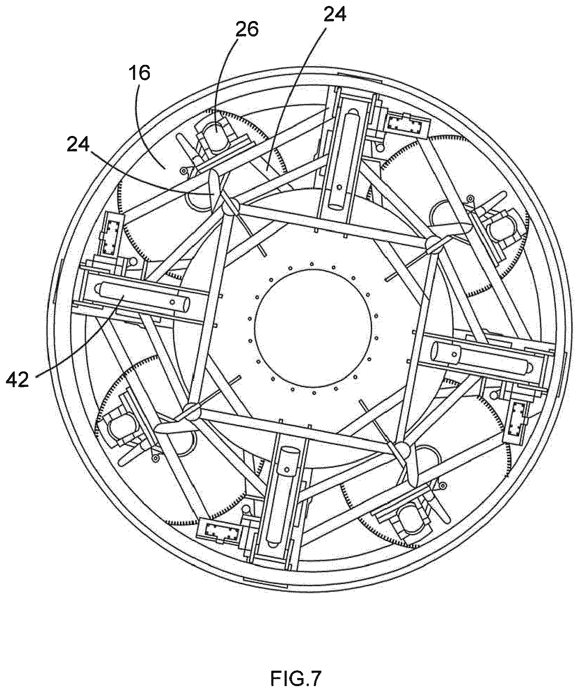

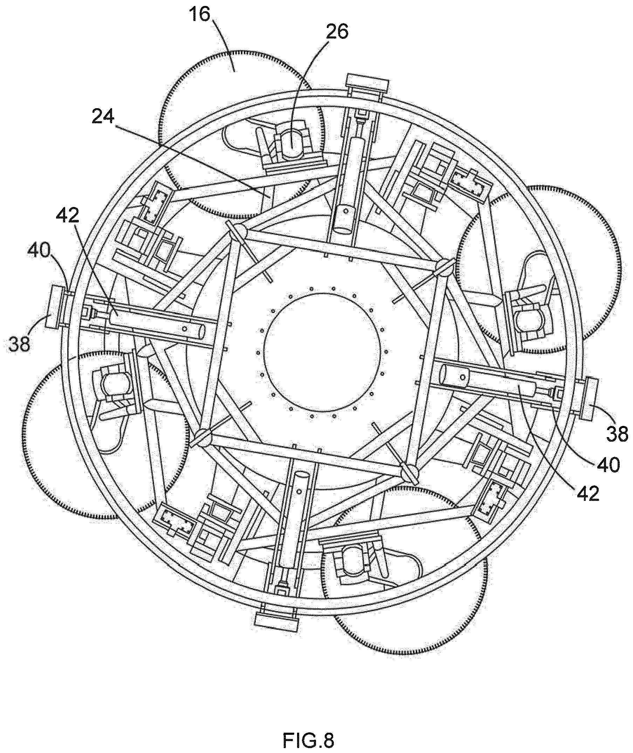

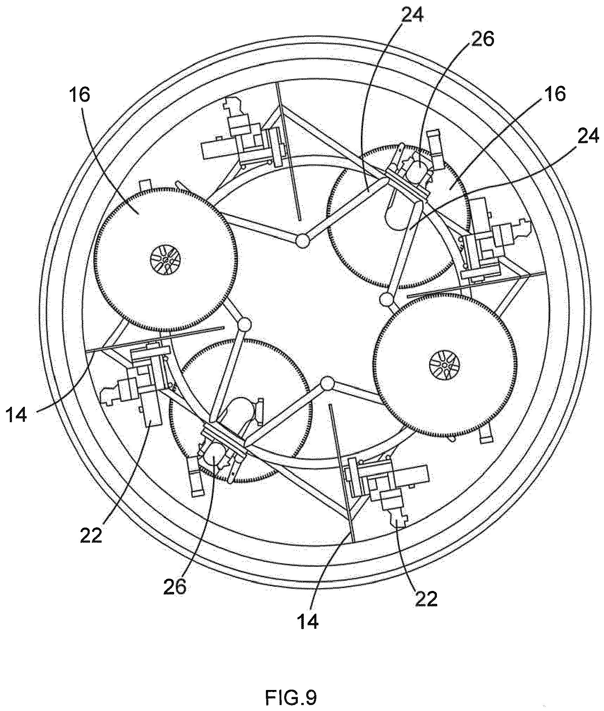

Referring to Figures 1 to 9, a cutting apparatus in the form of a multi-disk internal pipe cutter 10 comprises cutting means 12 in the form of four circular blades 14, oriented in respective planes generally parallel to a longitudinal axis of a pipe (Figure 9) hereafter described as vertical, and four blades 16, oriented transversely to the axis, hereafter referred to as horizontal, mounted on a frame 18.

The vertical blades 14 are mounted to the frame via slide and rail assemblies 20, which enable translation of the vertical blades 14 along the respective slides, and first actuators 22, for pivoting the vertical blades towards and away from a pile wall to be cut.

The horizontal blades 16 are mounted to the frame via arms 24 and second actuators 26 for moving the horizontal blades 16 towards and away from the pile wall to be cut.

The blades 14, 16 are driven by motors 34 mounted thereto.

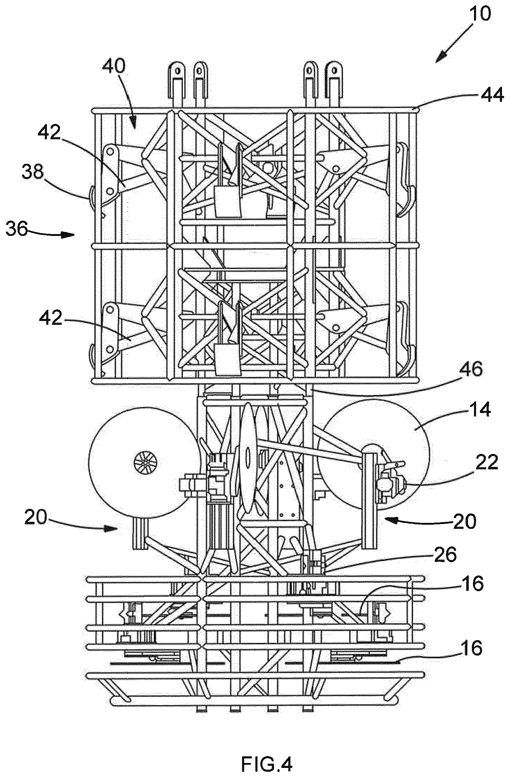

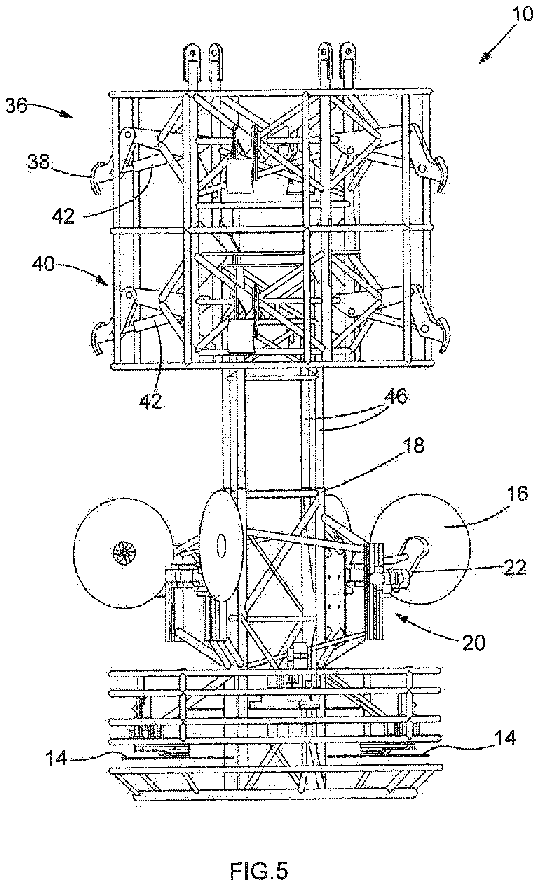

The pipe cutter 10 comprises a clamp assembly 36, itself comprising four abutments 38, which are fixed at the ends of respective pivoting arms 40. The arms 40 are moveable by third actuators 42 between a retracted position (for example, figure 4), wherein the pipe cutter 10 can be positioned within the pipe or withdrawn therefrom, and a clamping position (for example, figure 5), wherein the arms 40 extend the abutments 38 towards the inner wall of the pile 28 to clamp the pipe cutter 10 in a desired position, such as a ready position for performing a cutting operation.

The abutments 38, arms 40, and third actuators 42 are mounted on a clamp assembly frame 44 which is connected to the frame 18 by four slidably-extendible frame members 46. Frame members 46 co-operate with the frame 18 to enable relative movement of the frame 18 relative to the clamp assembly 36 along the longitudinal axis of the pipe cutter 10.

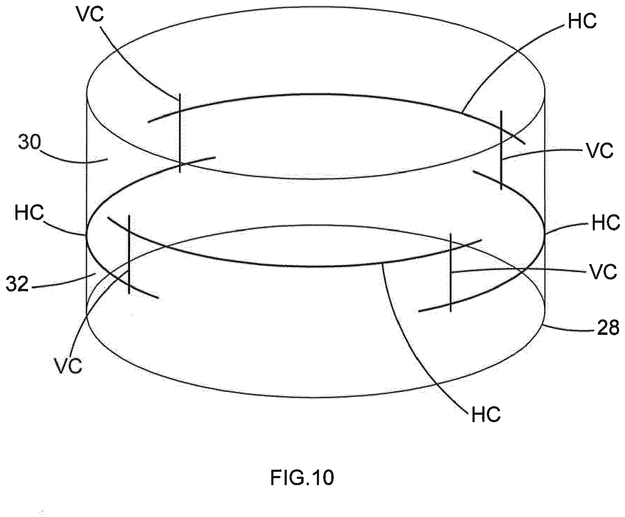

Referring to Figure 10, a representation of a pile 28 is shown having four horizontal cuts HC, two of which are axially offset from the others, and four axial, or vertical, cuts VC. The cuts HC, VC are shown forming a continuous cut around the circumference of a wall of the pile 28 to separate the pile 28 into an upper part 30 and a lower part 32.

In use, the horizontal blades 16 are extended towards the wall to perform a number of horizontal cuts HC. The vertical blades 14 are then extended to perform a number of vertical cuts VC, each of which connects a pair of horizontal cuts HC. The pipe cutter 10 is configured to cause the horizontal cuts HC to overlap one another such that, when the vertical cutting is performed, each vertical cut VC intersects two horizontal cuts HC to complete the continuous cut.

Upon completing the continuous cut, the upper part 30 of the cut pile will fall a distance approximately equal to the height dimension of the horizontal cuts HC, which is substantially equal to the thickness of the horizontal blades 16. The cutting apparatus 10 is configured to begin the vertical cuts VC a distance above the uppermost of the horizontal cuts HC sufficient to avoid impingement of the falling upper part 30 on the blades 14, 16 upon completion of the continuous cut. Preferably, the vertical cuts VC are performed simultaneously to increase the likelihood that the pile 28 falls straight down upon completion of the continuous cut.

It will be appreciated by persons skilled in the art that the above embodiments have been described by way of example only and not in any limitative sense, and that various alterations and modifications are possible without departure from the scope of the invention as defined by the appended claims.

## Claims

1. A cutting apparatus for cutting a tubular object, the apparatus comprising:
cutting means comprising at least one circular blade, the cutting means adapted to cut around a first part of a circumference of the object and around a second part of the circumference of the object, wherein the first part is axially offset from the second part, and to form a plurality of axial cuts to join the first and second parts to form a continuous cut around the circumference of the object; and wherein the cutting means is adapted to form the axial cuts to have dimensions sufficient to prevent impingement of the object on at least one circular blade upon completion of the cut.

2. The cutting apparatus of claim 1, further comprising actuating means for moving the cutting means between a stored configuration, a first cutting configuration to cut the first and second parts, and a second cutting configuration to form the axial cuts.

3. The cutting apparatus of claim 2, wherein the actuating means comprises at least one slide and rail assembly for actuating the cutting means along an axis of the assembly.

4. The cutting apparatus of claim 3, wherein the axis of the assembly is arranged to be substantially parallel to a longitudinal axis of the apparatus.

5. The cutting apparatus of any preceding claim, wherein the apparatus is configured to cut the first and second parts substantially transverse to a longitudinal axis of the apparatus.

6. The cutting apparatus of any preceding claim, wherein the apparatus is configured to form at least one axial cut substantially parallel to a longitudinal axis of the apparatus.

7. The cutting apparatus of any preceding claim, wherein the cutting means comprises at least two first blades and at least two second blades, wherein the at least two first blades are arranged substantially symmetrically around a longitudinal axis of the apparatus, and wherein the at least two second blades are arranged substantially symmetrically around the longitudinal axis of the apparatus.

8. The cutting apparatus of any preceding claim, wherein the cutting means comprises at least four blades arranged to substantially simultaneously form the axial cuts.

9. The cutting apparatus of any preceding claim, wherein the cutting means comprises at least one circular blade.

10. A method for cutting a tubular object using cutting means comprising at least one circular blade, the method comprising the steps of:
cutting around a first part of a circumference of the object;
cutting around a second part of the circumference of the object, wherein the first part is axially offset from the second part; and
forming a plurality of axial cuts to join the first and second parts to form at least one continuous cut around the circumference of the object;
wherein the cutting means is adapted to form the axial cuts to have dimensions sufficient to prevent impingement of the object on at least one circular blade upon completion of the cut.

11. The method of claim 11, wherein the cutting means is located within the tubular object being cut.

12. The method of claim 10 or claim 11 carried out using an apparatus according to any one of claims 1 to 9.
